# EUROPÄISCHE PATENTANMELDUNG

(11) **EP 1 884 534 A2**
(43) Veröffentlichungstag der Anmeldung: **06.02.2008**
(21) Anmeldenummer: 07013532.2
(22) Anmeldetag: 13.05.2002
(51) Int. Cl.: C08J 5/22

(54) **Modifikation von verstreckten Folien**

(30) Priorität: 11.05.2001 DE 10122814
(62) Teilanmeldung aus: 02743003.2
(71) Anmelder: Häring, Thomas, 70619 Stuttgart (DE); Häring, Rima, 70619 Stuttgart (DE)
(72) Erfinder: Häring, Thomas, 70619 Stuttgart (DE); Häring, Rima, 70619 Stuttgart (DE)

(57) **Zusammenfassung**

(DE) Die vorliegende Erfindung betrifft einen gestreckten Polymerfilm, umfassend (A) ein Polymer oder Polymerblend, und wenigstens (B) eine weitere Komponente mit einem durchschnittlichen Teilchendurchmesser von 0,1 bis 15 µm, und besonders bevorzugt ist der Bereich von 1,0-7,0 µm. Die Membranen werden verwendet in der Alken-Alkan-Trennung, Elektrodialyse, Meerwasserentsalzung, in Brennstoffzellenanwendungen und anderen Membrananwendungen.

## Beschreibung

### 1. Stand der Technik

Schon seit mehr als 20 Jahren werden verstreckte Folien in der Technik eingesetzt.
Polypropylen oder Polyethylenfolien, die durch Extrudieren gebildet werden, werden vielfach bei Anwendungen, wie bei der Verpackung von Nahrungsmitteln, als Behälter für Nahrungsmittel und bei ähnlichen Anwendungen verwendet Gestreckte Polypropylenfilme, insbesondere biaxial gestreckte Polypropylenfilme, werden vielfach bei Verpackungsmaterialen wegen ihrer ausgezeichneten mechanischen und optischen Eigenschaften verwendet Sie werden allgemein durch aufeinanderfolgendes biaxiales Strecken unter Verwendung einer Spannvorrichtung hergestellt.
In neuerer Zeit werden verstreckte Folien mit anorganischen Füllstoffen als atmungsaktive Folien für Windelfolie eingesetzt. Der Porendurchmesser der hier eingesetzten, sehr kostengünstigen, Folien ist aber um Größenordungen zu groß, als das diese Folien für Anwendungen, die dichte Membranen voraussetzen, wie z.B. in der Brennstoffzelle Verwendung finden könnten.

### 2. Aufgabe der vorliegenden Erfindung

Es ist Aufgabe der folgenden Erfindung kostengünstig Membranen herzustellen auf Basis von verstreckten Folien.

### 3. Erfindungsbeschreibung

Die vorliegende Erfindung betrifft Membranen auf der Basis von verstreckten Folien.

Erfindungsgemäß kann die obige Aufgabe gelöst werden durch einen gestreckten Polymerfilm, umfassend (A) ein Polymer oder Polymerblend, und wenigstens (B) einer weiteren Komponente mit einem durchschnittlichen Teilchendurchmesser von 0,1 bis 15µm, welche durch (C) ein oder mehrere Nachbehandlungsschritte, nach der Verstreckung zu einer Membran verarbeitet wird.

Es wurde dabei festgestellt, dass ohne die Verstreckung, die Folie bestehend aus dem Polymer (A) und der teilchenförmigen Komponente (B), bei gleichen Nachbehandlungsschritten (C) nicht zu einer Membran mit gleichen Eigenschaften verarbeitet werden kann.

Der durchschnittliche Teilchendurchmesser der Komponente (B) liegt im Bereich von 0,1-15µm. Er beträgt bevorzugt 0,5-8,0 µm, und besonders bevorzugt ist der Bereich von 1,0-7,0 µm. Wenn der Durchmesser kleiner als 0,1 µm ist, ergibt sich eine sekundäre Agglomeration, und die entstehenden Teilchen besitzen zum Teil große Durchmesser, die im Verstreckungsprozess meist zu einem Reißen der Folie führen. Hinsichtlich der Form der Teilchen gibt es keine spezielle Einschränkung. Es sind aber sphärische Teilchen bevorzugt.

Vor der Verstreckung beträgt der Anteil der Komponente (B) an der unverstrecketen Folie 2 bis 80 Gewichtsprozent, bevorzugt sind 10 bis 70 Gewichtsprozent, und besonders bevorzugt sind 20 bis 60 Gewichtsprozent. Der Gewichtsanteil der polymeren Komponente (A) beträgt vor der Verstreckung entsprechend 98 bis 20 Gewichtsprozent, bevorzugt sind 90 bis 30 Gewichtsprozent, und besonders bevorzugt sind 80 bis 40 Gewichtsprozent.

Für das Verfahren, gemäß dem die teilchenförmige Komponente (B) in die polymere Komponente (A) eingearbeitet wird, gibt es keine besondere Beschränkung. Das Verfahren umfasst ein einfaches Mischverfahren. Der Mischprozess kann durch Hinzufügen der Komponente (B) in die geschmolzene Komponente (A) erfolgen. Der Mischvorgang kann dabei stattfinden unter Verwendung einer Schneckenextrudierknetvorrichtung (beispielsweise einem Extruder mit einer Schnecke oder einem Extruder mit Zwillingsschnecken), einem Banbury-Mischer, einem kontinuierlichen arbeitenden Mischer und einer Mischwalze oder ähnlichem. Lässt sich die Komponente (A) nicht schmelzen oder ist dies nicht erwünscht, so wird sie in einem geeigneten Lösungsmittel oder Lösungsmittelgemisch aufgelöst. Geeignet ist jedes Lösungsmittel in dem sich die Komponente (A) auflöst und das gleichzeitig kein Lösungsmittel für die Komponente (B) ist. Bevorzugte Lösungsmittel sind Wasser und aprotische Lösungsmittel, wir Tetrahydrofuran (THF), Dimethylsulfoxid (DMSO), N-Methyl-Pyrrolidon (NMP), Sulfolan und Dimethylacetamid (DMAc). Die Komponente (B) ist dann fein verteilt in der gelösten Komponente (A).
In jedem Fall des Mischverfahrens entsteht ein Komposit.
Bei der Verwendung von Lösungsmitteln müssen diese nach dem Ziehen zu einem Film auf einer geeigneten Unterlage in einem Trocknungs- oder Fällprozess wieder entfernt werden. Dies ist Stand der Technik und zum Beispiel beschrieben in PCTIEP 00/03910 und WO 01/87992. Die erhaltene Folie stellt eine Kompositfolie bzw. Kompositmembran dar. Die Komponente (B) ist verteilt in der Matrix der Komponente (A).
Ist die Kristallinität der verwendeten Polymere in der unverstreckten Folie so groß, dass die Folie im getrockneten Zustand sich nicht verstrecken lässt, so wird das Lösungsmittel nicht vollständig entfernt. Es wurde dabei überraschend festgestellt, dass Folien bestehend aus den Komponenten (A) und (B), die über ein Lösungsmittelverfahren mit anschließendem Trocknungsprozess hergestellt wurden und die im getrockneten Zustand ohne Zerstörung nicht verstreckbar sind, mit einem Restlösungsmittelgehalt sehr wohl verstreckbar sind. Die Verstreckung erfolgt danach in einem Temperaturbereich der über dem Schmelzpunkt des in der Membran verbleibenden Lösungsmittel liegt und unterhalb des Siedepunktes des Lösungsmittel liegt. Diesem Verstreckungsvorgang kann sich ein weiterer lösungsmittelfreier Verstreckungsprozeß anschließen.
Der Restlösungsmittelgehalt der unverstreckten Folie liegt dabei zwischen zwei und dreißig Gewichtsprozent, besonders bevorzugt ist der Bereich zwischen fünf und zwanzig Gewichtsprozent an Lösungsmittel in der unverstreckten Folie.

Der gestreckte erfindungsgemäße Kompositfilm kann vor oder nach der Nachbehandlung (C) je nach Erfordernis Oberflächenbehandlungen, wie einer Coronaentladung, Plasmabehandlung und ähnlichem, an einer oder auf beiden Seiten, unterworfen werden. Der erfindungsgemäße gestreckte Kompositfilm kann vor oder nach der Nachbehandlung (C) auf einer oder auf beiden Seiten mit einer Schicht aus einem Polymer oder Polymergemisch, das gegebenenfalls funktionelle Gruppen trägt, Lösungsmittel oder Lösungsmittelfrei beschichtet oder laminiert werden. Funktionelle Gruppen angeben.

Für den Fall, dass die Komponente (A) unzerstörbar schmelzbar ist kann die gestreckte, noch nicht mit dem Verfahren (C) nachbehandelte Folie, enthaltend die Komponenten (A) und (B), nach irgendeinem bekannten Verfahren ohne jede Beschränkung hergestellt werden. Die Herstellung einer verstreckten Kompositfolie kann beispielsweise nach einem Verfahren erfolgen, welches folgende Stufen umfasst: Schmelzextrudieren gemäß einem T-Düsenverfahren, einer Zusammensetzung aus einer schmelzbaren Komponente (A), enthaltend eine bei gleicher Temperatur nicht schmelzbaren teilchenförmigen Komponente (B) und Durchladen des Extrudats durch eine Kühlwalze, kombiniert mit einem Luftrakel oder durch Spaltwalzen unter Folienbildung. Die Herstellung eines biaxial gestreckten Films durch darauffolgendes biaxiales Strecken unter Verwendung einer Spannvorrichtung erfolgt bevorzugt gemäß einem Verfahren, das die Bildung einer Folie oder eines Films aus der oben beschriebenen Zusammensetzung gemäß einem T-Düsenverfahren umfasst oder gemäß einem Aufblasverfähren oder ähnlichem, und wobei dann die Folie oder der Film in eine longitudinale Verstreckungsvorrichtung geleitet wird, um ein longitudinales Strecken mit dem 0,5- bis 10fachen (ausgedrückt als mechanisches Ziehverhältnis) mit Heizwalzentemperatur von 100 bis 380°C, bevorzugt 120 bis 350°C und besonders bevorzugt 130° bis 250°C, zu erreichen. Der monoaxial gestreckte Film wird dann einem transversalen Strecken um das 0,5- bis 15fache unter Verwendung einer Spannvorrichtung bei einer Spannungsvorrichtungstemperatur von 100 bis 380°C, bevorzugt 120 bis 350°C und besonders bevorzugt 130° bis 250°C unterworfen. Der entstehende biaxial gestreckte Film wird weiter, je nach Bedarf, einer Wärmebehandlung bei 80 bis 380°C unterworfen (bei dieser Wärmebehandlung ist eine transversale Relaxation von 0-25% erlaubt). Selbstverständlich kann ein weiteres Strecken nach dem obigen Strecken erfolgen. Bei dem longitudinalen Verstrecken ist es möglich, ein mehrstufiges Strecken, Walzen, Ziehen usw. zu kombinieren. Das monoaxiale Strecken kann alleine verwendet werden, um einen gestreckten Film zu erhalten.

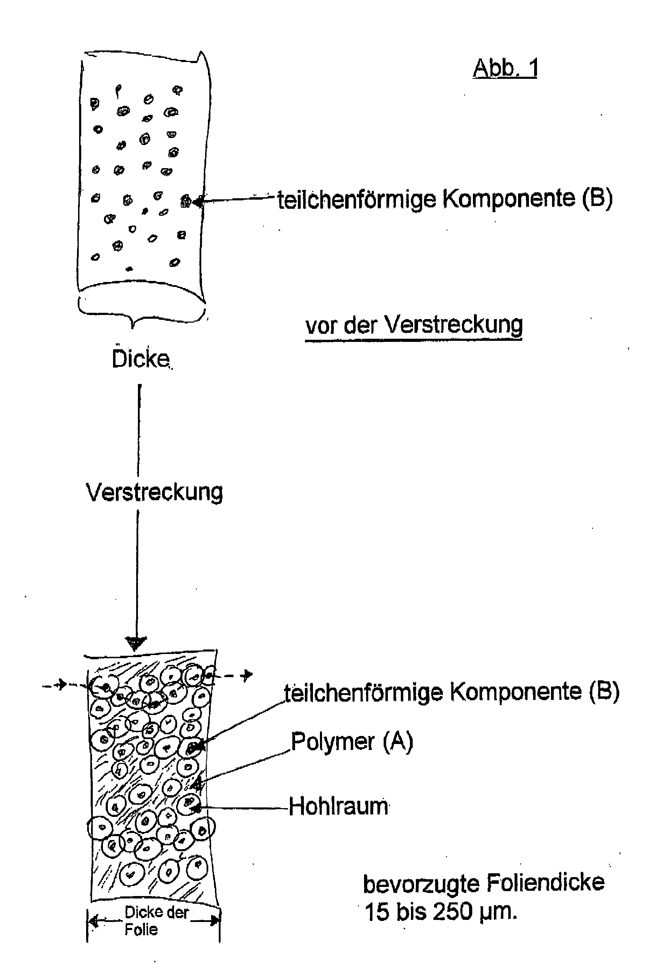

Die teilchenförmige Komponente (B) kann organisch oder anorganisch sein. Bedingung für die teilchenförmige Komponente (B) ist, dass sich bei dem anschließenden Streckprozess um das bevorzugt sphärische Teilchen ein Spalt bzw. ein freier Raum bildet (Abb. 1). Das bevorzugt sphärische Teilchen befindet sich nach dem Streckprozess in einem Hohlraum oder bei entsprechender Dicke der Folie hat sich um die teilchenförmige Komponente (B) eine Pore gebildet. Wenn genügend Hohlräume aneinander grenzen und sich ihre Querschnitte überschneiden entsteht ein durchgängiger Weg bzw. Pfad von einer Seite der Folie auf die andere Seite, was letztendlich auch wieder eine Pore darstellt Die Komponente (B) verbleibt nach der Verstreckung in der Folie.
Es wird über die Verstreckung ein zweiter Pfad in der Folie geschaffen. Der erste Pfad bzw. die erste Phase stellt das Polymer (A), aus dem die Folie besteht, selbst dar. Der zweite Pfad bzw. Phase sind die Hohlräume, die durch den Verstreckungsvorgang entstanden sind. In den Hohlräumen befindet sich die teilchenförmige Komponente (B). Als Pfad soll verstanden werden eine durchgängige Phase von einer Seite zur anderen. Damit der Weg bzw. die Phase durchgängig ist muss eine echte Perkolation möglich sein. D.h., eine permitierende Substanz, eine Flüssigkeit (z.B. Wasser), ein Gas oder Ion muss von der einen Seite auf die andere Seite durchdringen können. Wird der Hohlraum gefüllt, so sind die Eigenschaften des neuen Pfades abhängig von dem "Füllmaterial". Ist das Füllmaterial ionenleitend, so ist der gesamte Pfad ionenleitend. Wichtig ist, dass der Pfad durchgängig ist.

Als teilchenförmige Komponente (B) sind besonders bevorzugt alle anorganischen Substanzen, die Schichtstrukturen oder Gerüststrukturen ausbilden. Besonders bevorzugt sind Schicht- und/oder Gerüstsilikate. Alle synthetischen und natürlichen Zeolithe sind unter den Gerüstsilikaten bevorzugt.

Ist die anorganische Komponente (B) ein Schichtsilikat, so ist er auf der Basis von Montmorillonit, Smectit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate. Das Schichtsilikat kann delaminiert oder pillartiert sein. Besonders bevorzugt wird Montmorillonit. Weiterhin ist bevorzugt die protonierte Form der Schicht- und/oder Gezüstsilikate.

In einer Ausführungsform der Erfindung wird die Komponente (B), die Schicht- und/oder Gerüststrukturen enthält, vor der Verstreckung und/oder nach der Verstreckung funktionalisiert. Geschieht die Funktionalisierung nach der Verstreckung, so ist sie ein Teil der Nachbehandlung (C). In einer bevorzugten Ausführungsform werden die Schicht- und/oder Gerüstsilikate vor oder nach der Verstreckung funktionalisiert.

### Beschreibung des funktionalisierten Schichtsilikates:

Unter einem Schichtsilikat versteht man im allgemeinen Silikate, in welchen die SiO₄-Tetraeder in zweidimensionalen unendlichen Netzwerken verbunden sind. (Die empirische Formel für das Anion lautet (Si₂O₅²⁻)n). Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Unter einem funktionalisiertem Schicht- oder Gerüstsilikat sollen Schicht- oder Gerüstsilikate verstanden werden, bei welchen durch Umsetzung mit sogenannten Funktionalisienmgsmitteln die Schichtabstände durch Einlagerung von Molekülen zunächst vergrößert werden.
Die Schichtdicken derartiger Silikate, vor der Delaminierung der Schichten durch die Einlagerung von funktionellen Gruppen tragenden Molekülen, betragen üblicherweise von 5 bis 100 Angström, vorzugsweise 5 bis 50 und insbesondere 8 bis 20 Angström.
Zur Funktionalisierung werden die Schicht- oder Gerüstsilikate (vor oder nach der Herstellung der erfindungsgemäßen Komposite) mit sogenannten funktionalisierenden Hydrophobierungsmitteln umgesetzt, welche oft auch als Oniumionen oder Oniumsalze bezeichnet werden. Die Einlagerung von organischen Molekülen hat oft auch eine Hydrophobierung der Silikate zur Folge. Daher wird hier der Begriff funktionalisierende Hydrophobierungsmittel verwendet.
Die Kationen der Schicht- oder Gerüstsilikate werden durch organische fünktionalisierende Hydrophobierungsmittel ersetzt, wobei durch die Art des organischen Restes die gewünschte chemische Funktionalisierung im Inneren und/oder an der Oberfläche des Silikates bestimmt werden kann. Die chemische Funktionalisierung richtet sich nach der Art des jeweiligen funktionalisierenden Moleküls, Oligomers oder Polymeren, welches in das Schichtsilikat eingebaut werden soll.
Der Austausch der Kationen, meist Metallionen oder Protonen kann vollständig oder teilweise erfolgen. Bevorzugt ist ein vollständiger Austausch der Kationen, Metallionen oder Protonen. Die Menge der austauschbaren Kationen, Metallionen oder Protonen wird üblicherweise in Milliäquivalent (meq) pro 1 g Gerüst- oder Schichtsilikat angegeben und als Ionenaustauscherkapazität (IEC) bezeichnet.
Bevorzugt sind Schicht- oder Gerüstsilikate mit einer Kationenaustauscherkapazität von mindestens 0,5 , vorzugsweise 0,8 bis 1,3 meq/g.

Geeignete organische funktionalisierende Hydrophobierungsmittel leiten sich von Oxonium-, Ammonium-, Phosphonium- und Sulfoniumionen ab, welche einen oder mehrere organische Reste tragen können.
Als geeignete funktionalisierende Hydrophobierungsmittel seien solche der allgemeinen Formel I und/oder II genannt:

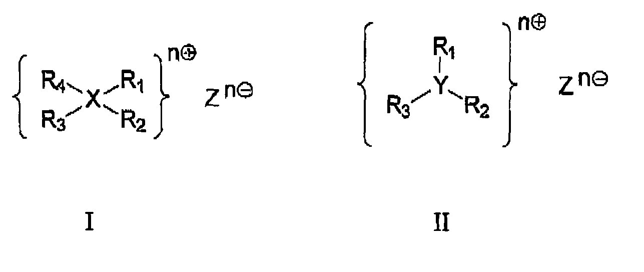

### Wobei die Substituenten folgende Bedeutung haben:

R1, R2, R3, R4 unabhängig voneinander Wasserstoff, einen geradkettigen verzweigten, gesättigten oder ungesättigten Koblenwasserstoffrest mit 1 bis 40, vorzugsweise 1 bis 20 C-Atomen, welcher gegebenenfalls mindestens eine funktionelle Gruppe trägt oder 2 der Reste miteinander verbunden sind, insbesondere zu einem heterocyclischen Rest mit 5 bis 10 C-Atomen besonders bevorzugt mit einem und mehr N-Atomen,
X für Phosphor, Stickstoff oder Kohlenstoff,
Y für Sauerstoff, Schwefel oder Kohlenstoff,
n für eine ganze Zahl von 1 bis 5, vorzugsweise 1 bis 3 und
Z für eine Anion steht.
Für den Fall, dass Y für Kohlenstoff steht ist einer der Reste R1, R2 oder R3 doppelt an den Kohlenstoff gebunden.
Geeignete funktionelle Gruppen sind Hydroxyl-, Nitro- , Phosphonsäure- oder Sulfonsäuregruppen, wobei Carboxyl- und Sulfonsäuregruppen besonders bevorzugt sind. Ebenso sind besonders bevorzugt Sulfonsäurechlorid und Carbonsäurechloride.
Geeignete Anionen Z leiten sich von Protonen liefernden Säuren, insbesondere Mineralsäuren ab, wobei Halogene wie Chlor, Brom, Fluor, Iod, Sulfat, Sulfonat, Phosphat, Phosphonat, Phosphit und Carboxylat, insbesondere Acetat bevorzugt sind.
Die als Ausgangsstoffe verwendeten Schicht- und/oder Gerüstsilikate werden in der Regel in Form einer Suspension umgesetzt. Das bevorzugte Suspendierungsmittel ist Wasser, gegebenenfalls in Mischung mit Alkoholen, insbesondere niederen Alkoholen mit 1 bis 3 Kohlenstoffatomen. Ist das funktionalisierende Hydrophobierungsmittel nicht wasserlöslich, so wird das Lösungsmittel bevorzugt indem es sich löst. Besonders ist dies dann ein aprotisches Lösungsmittel. Weitere Beispiele für Suspendiermittel sind Ketone und Kohlenwasserstoffe. Gewöhnlich wird ein mit Wasser mischbares Suspendierungsmittel bevorzugt. Bei der Zugabe des Hydrophobierungsmittel zum Schichtsilikat tritt ein Ionenaustausch ein, wodurch das Schichtsilikat überlicherweise aus der Lösung ausfällt. Das als Nebenprodukt des Ionenaustausch entstehende Metallsalz ist vorzugsweise wasserlöslich, so dass das hydrophobierte Schichtsilikat als kristalliner Feststoff durch z.B. Abfiltrieren abgetrennt werden kann. Findet die Funktionalisierung nach der Verstreckung in der Folie, so liegt das Schicht- oder Gerüstsilikat vor der Funktionalisierung natürlich als Feststoff vor. Der Kationenaustausch erfolgt durch Nachbehandeln der verstreckten Folie in einer die funktionalisierenden Substanzen enthaltenden Lösung. Die Entfernung der ursprünglich an das Silikat gebundenen Kationen erfolgt entweder über das gleiche Lösungsmittel oder eine geeignetes anderes Lösungsmittel in einem zweiten Schritt. Es ist auch möglich die ursprünglich an das Silikat gebundenen Kationen als Feststoff, insbesondere als schwerlösliches Salz im und an der Silikatoberfläche zu fixieren. Dies ist dann häufig der Fall, wenn das ursprünglich am Silikat gebundene Kation ein zwei-, drei- oder vierwertiges Kation, insbesondere Metallkation ist. Beispiele hierfür sind Ti⁴⁺, Zr⁴⁺, ZrO²⁺ und TiO²⁺.
Der Ionenaustausch ist von der Reaktionstemperatur weitgehend unabhängig. Die Temperatur liegt vorzugsweise über dem Kristallisationspunkt des Mediums, indem sich die funktionalisierenden Substanzen befinden und unter seinem Siedepunkt. Bei wäßrigen Systemen liegt die Temperatur zwischen 0 und 100°C, vorzugsweise zwischen 40 und 80°C.
Als Futiktionatisierungmittel sind Alkylammoniumionen bevorzugt, besonders dann wenn als funktionelle Gruppe zusätzlich noch ein Carbonsäurechlorid oder Sulfonsäurechlorid an demselben Molekül vorhanden ist. Die Alkylammoniumionen sind über übliche Methylierungsreagenzien, wie Methyljodid erhältlich, Geeignete Ammoniumionen sind alpha-omega-Aminocarbonsäuren, besonders bevorzugt sind
Aminoalkylarylsulfohalogenid 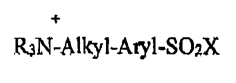 X=Cl; Br; J; F
Aminoalkylarylsulfonsäuren, 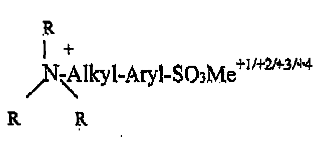 Me= Metall o. H o. ZrO²⁺ o. TiO²⁺
und die omega-Alkylaminosulfonsäuren. 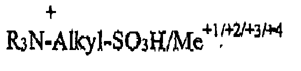 Die alpha-omega-Aminoarylsulfonsäuren 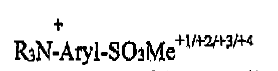 Me= Metall o. H o. ZrO²⁺ o. TiO²⁺
und die alpha-omega-Alkylaminosulfonsäurehalogenide 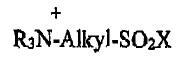 X=F; Cl; Br; J

Weitere bevorzugte Ammoniumionen sind Pyridin- und Laurylammoniumionen.
Nach der Funktionalisierung weisen die Schichtsilikate im allgemeinen einen Schichtabstand von 10 bis 50 Angström, vorzugsweise von 13 bis 40 Angström auf.
Das hydrophobierte und funktionalisierte Schichtsilikat wird von Wasser durch Trocknen befreit. Im allgemeinen enthält das so behandelte Schichtsilikat noch einen
Restwassergehalt von 0-5 Gew. % Wasser. Anschließend kann das funktionalisierte Schichtsilikat als Suspension in einem möglichst wasserfreien Suspendiermittel mit den erwähnten Polymeren gemischt werden und zu einer Folie weiterverarbeitet werden. In dem Fall, das die Extrusion zur Darstellung der unversteckten Folie gewählt wird, kann das funktionalisierte Schicht- oder Gerüstsilikat zur Schmelze hinzugegben werden. Bevorzugt ist die Zugabe von unmodifizierten Schicht- oder Gerüstsilikaten, zur Schmelze und eine Funktionalisierung der Silikate nach der Verstreckung. Dies ist besonders bevorzugt wenn die Extrusionstemperatur über der Zerstörungstemperatur der funktionalisierenden Substanzen liegt.

Eine speziell bevorzugte Funktionalisierung der Gerüst- und/oder Schichtsilikate erfolgt mit modifizierten Farbstoffen oder deren Vorstufen, besonders mit Triphenylmethanfarbstoffen. Sie haben die allgemeine Formel:

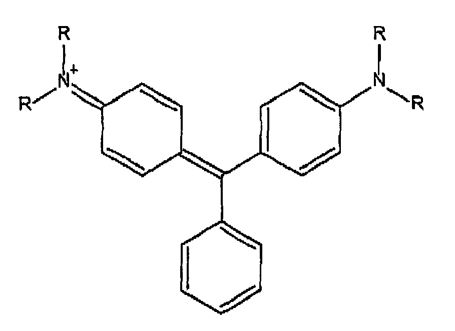

In der vorliegenden Erfindung werden Farbstoffe verwendet, die sich von dem folgendem Grundgerüst ableiten:

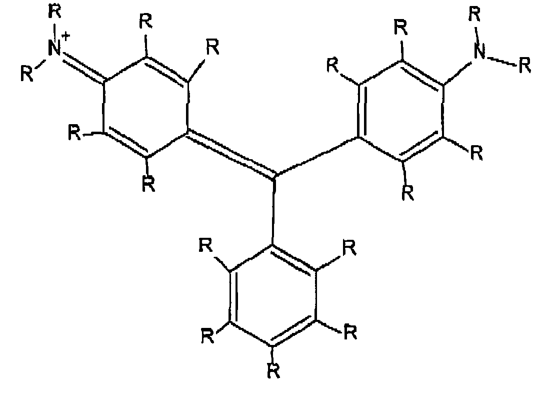

Die Reste R können unabhängig voneinander Wasserstoff, eine 1 bis 40 Kohlenstoffatome aufweisende Gruppe, vorzugsweise eine verzweigte oder nicht verzweigte Alkyl-, Cycloalkyl- oder eine gegebenenfalls alkylierte Arylgruppe sein, die gegebenenfalls ein oder mehrere Fluoratome enthalten. Die Reste R können ebenso unabhängig voneinander den Resten R1, R2, R3 oder R4 mit den funktionellen Gruppen aus der oben genannten allgemeinen Formel (I) und (II) für funktionalisierende Hydrophobierungsmittel entsprechen.

Zur Funktionalisierung des Schichtsilikates wird der Farbstoff oder seine reduzierte Vorstufe in einem aprotischen Lösungsmittel (z.B. Tetrahydrofuran, DMAc, NMP) zusammen mit dem Silikat umgesetzt. Nach ca. 24 Stunden ist der Farbstoff bzw. die Vorstufe in die Kavitäten des Schichtsilikates interkaliert, Die Interkalation muß von der Art sein, daß eine ionenleitende
Gruppe sich an der Oberfläche des Silikatpartikels befindet.
Die nachfolgende Abbildung zeigt schematisch den Vorgang

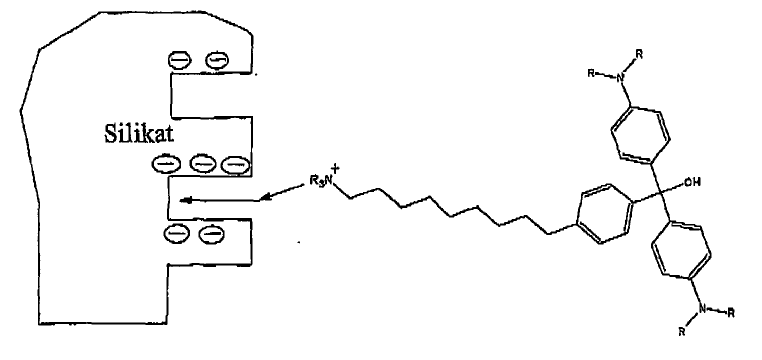

Das so funktionalisierte Schichtsilikat wird als Zusatz zu der Polymerlösung wie in Anmeldung DE10024575.7 beschrieben hinzugegeben. Die Funktionalisierung der Schicht- oder Gerüstsilikate kann ebenso wieder über einen Kationenaustausch in der verstreckten Folie erfolgen. Es hat sich als besonders günstig erwiesen die Vorstufe der Farbstoffe zu verwenden. Erst in einer darauffolgenden Oxidation durch eine saure Nachbehandlung werden die eigentlichen Farbstoffe durch Abspaltung von Wasser gebildet.
Im Falle der Triphenylmethanfarbstoffe wurde dabei überraschend festgestellt, daß eine

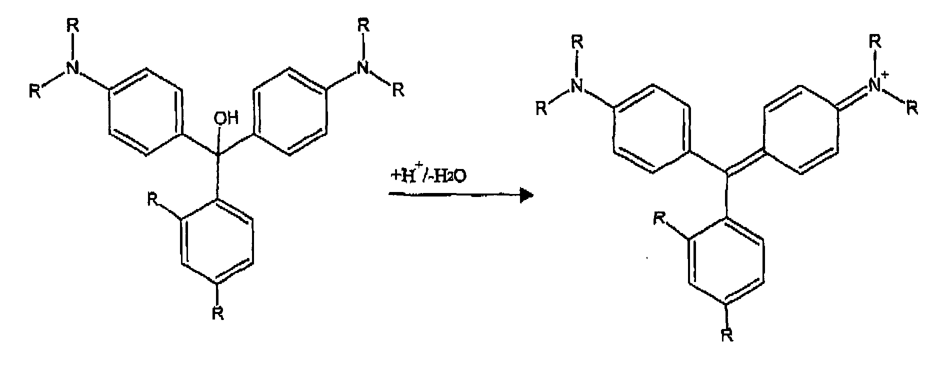

Protonenleitung, in den daraus hergestellten Membranen unterstützt wird. Ob es sich sogar um eine wasserfreie Protonenleitung handelt kann nicht mit ausreichender Sicherheit gesagt werden. Sind die Farbstoffe nicht an das Silikat gebunden, liegen sie also in freier Form in einer verstreckten Membran vor, so werden sie bereits nach kurzer Zeit mit dem Reaktionswasser in der Brennstoffzelle ausgetragen.

Erfindungsgemäß werden die Sulfinatgruppen enthaltenden Polymermischungen aus der oben angeführten Stammanmeldung, besonders bevorzugt die thermoplastischen funktionalisierten Polymere (Ionomere) zu der Suspension der hydrophobierten Schichtsilikate gegeben. Dies kann in bereits gelöster Form erfolgen oder die Polymere werden in der Suspension selbst in Lösung gebracht. Allgemein ist der Anteil der Schichtsilikate zwischen 1 und 70 Gew.%. Besonders zischen 2 und 40 Gew. % und speziell zwischen 5 und 15 Gew. %.

Eine weitere Verbesserung gegenüber der Stammanmeldung ist die zusätzliche Einmischung von Zirkonylchlorid (ZrOCl₂) in die Membranpolymerlösung und in die Kavitäten der Schicht- und/oder Gerüstsilikate. Erfolgt die Nachbehandlung der Membran in Phophorsäure, so fällt in unmittelbarer Nähe des Silikatkomes in der Membran schwerlösliches Zirkonphosphat aus. Zirkonphosphat zeigt im Betrieb der Brennstoffzelle eine Eigenprotonenleitfähigkeit. Die Protonenleitfähigkeit funktioniert über die Bildung der Hydrogenphosphate als Zwischenschritte und ist Stand der Technik. Das gezielte Einbringen in direkter Nähe eines Wasserspeichers (Silikate) ist neu.

Die verstreckte, mikroporöse Folie enthaltend eine teilchenförmige Komponente (B) wird erfindungsgemäß einer oder mehrerer Nachbehandlungen (C) unterworfen. In einer besonderen Ausführungsform der Erfindung enthält die mikroporöse Folie Schicht- und/oder Gerüstsilikate. Diese werden nun in einem oder mehreren Schritten funktionalisiert.

Ist der funktionalisierte Füllstoff, besonders Zeolithe und Vertreter der Beidelithreihe und Bentonite, die einzige ionenleitende Komponente, so ist sein Gewichtsanteil allgemein zwischen 5 bis 80%, besonders zwischen 20 und 70% und speziell im Bereicht von 30 bis 60% Gew..

Die polymeren Komponenten der Komponente (A) der erfindungsgemäßen Compositemembranen sind folgendermaßen definiert:

### (1) Hauptketten (Backbones) der erfindungsgemäßen Polymere :

Eigentlich sind als Polymerhauptketten alle Polymere möglich. Bevorzugt als Hauptketten werden jedoch:
- Polyolefine wie Polyethylen, Polypropylen, Polyisobutylen, Polynorbornen, Polymethylpenten, Poly(1,4-isopren), Poly(3,4-isopren), Poly(1,4-butadien), Poly(1,2-butadien)
- Styrol(co)polymere wie Polystyrol, Poly(methylstyrol), Poly(α,β,β-trifluorstyrol), Poly(pentafluorostyrol)
- perfluorierten Ionomere wie Nafion® oder der SO₂Hal-Vorstufe von Nafion® (Hal=F, Cl, Br, I), Dow®-Membrane, GorcSelect®-Membrane.
- N-basischc Polymere wie Polyvinylcarbazol, Polyethylenimin, Poly(2-vinylpyridin), Poly(3-vinylpyridin), Poly(4-vinylpyridin)
- (Het)arylhauptkettenpolymere, die die in Abb. 1 aufgeführten Baugruppen enthalten.

Besonders bevorzugt werden (Het)arylhauptkettenpolymere wie:
- Polyetherketone wie Polyetherketon PEK Victrex®, Polyetheretherketon PEEK Victrex®, Polyetheretherketonketon PEEKK Polyetherketonetherketon-keton PEKEKK Ultrapek®
- Polyethersulfone wie Polysulfon Udel®, Polyphenylsulfon Radel R®, Polyetherethersulfon Radel A®, Polyethersulfon PES Victrex®
- Poly(benz)imidazole wie PBI Celazol® und andere den (Benz)imidazol-Baustein enthaltende Oligomere und Polymere, wobei die (Benz)imidazolgruppe in der Hauptkette oder in der Polymerseitenkette vorhanden sein kann
- Polyphenylenether wie z. B. Poly(2,6-dimethyloxyphenylen), Poly(2,6-diphenyloxyphenylen)
- Polyphenylensulfid und Copolymere
- Poly(1,4-phenylene) oder Poly(1,3-phenylene), die in der Seitengruppe ggf. mit Benzoyl-, Naphtoyl- oder o-Phenyloxy-1,4-Benzoylgruppen, m-Phenyloxy-1,4-Benzoylgruppen oder p-Phenyloxy-1,4-Benzoylgruppen modifiziert sein können.
- Poly(benzoxazole) und Copolymere
- Poly(benzthiazole) und Copolymere
- Poly(phtalazinone) und Copolymere
- Polyanilin und Copolymere
- Polythiazol
- Polypyrrol

### (2) Polymere des Typs A (polymere mit Kationenaustwischergruppen oder deren nichionischen Vorstufen):

Unter den Polymertyp A fallen alle Polymere, die aus den o. g. Polymerhauptketten *(1)* und folgenden Kationenaustauschergruppen oder ihren nichtionischen Vorstufen bestehen können:
SO₃H, SO₃Mo; PO₃H₂, PO₃Me₂; COOH, COOMe
SO₂X, POX₂, COX mit X-Hal, OR₂, N(R₂)₂, Anhydridrest, 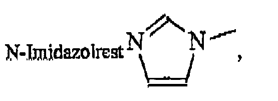 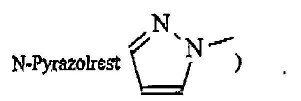
Dabei sind SO₃H, SO₃Me; PO₃H₂, PO₃Me₂ bzw. SO₂X, POX₂ als funktionelle Gruppen bevorzugt. Besonders bevorzugt als funktionelle Gruppen sind die stark sauren Sulfonsäuregruppen oder ihre nichtionischen Vorstufen. Als
Polymerhauptketten sind Arylhauptkettenpolymere bevorzugt. Besonders bevorzugt sind Poly(etherketone) und Poly(ethersulfone)

### (3) Polymere des Typs B (Polymere mit N-basischen Gruppen und/oder Anionenastauschergruppen):

Unter den Polymertyp A fallen alle Polymere, die aus den o. g. Polymerhauptketten *(1)* bestehen und folgende Anionenaustauschergruppen oder ihren nichtionischen Vorstufen (mit primärem, sekundärem, tertiärem basischem N) tragen können:
N(R₂)₃⁺Y⁻, P(R₂)₃⁺Y⁻, wobei die R₂-Reste gleich oder voneinander verschieden sein können;
N(R₂)₂ (primäre, sekundäre oder tertiäre Amine);
Polymere mit den in Abb, 2 aufgeführten N-basischen (Het)aryl- und Heterocyclusgruppen.
Als Polymerhauptkotten sind (Het)arylhauptkettenpolymere wie Poly(etherketone), Poly(ethersulfone) und Poly(benzimidazole) bevorzugt. Als basische Gruppen sind bevorzugt primäre, sekundäre und tertiäre Aminogruppen, Pyridylgruppen und Imidazolgruppen.

### (4j Polymere des Typs C (Polymere mit Vernetzungsgruppen wie Sulfinatgruppen und/oder ungesättigten Gruppen):

Unter den Polymertyp C fallen alle Polymere, die aus den o. g. Polymerhauptketten *(1)* und Vernetzungsgruppen bestehen. Vernetzungsgruppen sind beispielsweise:
4a) Alkengruppen: Polymer-C(R₁₃)=C(R₁₄R₁₅) mit R₁₃, R₁₄, R₁₅=R₂ oder R₄
4b) Polymer-Si(R₁₆R₁₇)-H mit R₁₆, R₁₇=R₂ oder R₄
4c) Polymer-COX, Polymer-SO₂X, Polymer-POX₂
4d) Sulfinatgruppen Polymer-SO₂Me
4e) Polymer-N(R₂)₂ mit R₂≠H.

Dabei kann auf der Polymerhauptkette einer der genannten Vernetzungsgruppen oder mehrere der genannten Vernetzungsgruppen liegen. Die Vernetzung kann dabei durchgeführt werden durch folgende literaturbekannte Reaktionen:
(I) Gruppe 4a) durch Addition von Peroxiden;
(II) Gruppe 4a) mit Gruppe 4b) unter Pt-Katatyse via Hydrosilylierung;
(III) Gruppe 4d) mit Dihalogenanlkan- oder Dihalogenaryl-Vernetzern (z. B. Hal-(CH₂)ₓ-Hal, x=3-20) unter S-Alkylierung der Sulfinatgruppe;
(IV) Gruppe 4e) mit Dihalogenalkan- oder Dihalogenaryl-Vernetzern (z. B. Hal-(CH₂)ₓ-Hal, x=3-20) unter Alkylierung der tertiären basischen N-Gruppe
(V) Gruppe 4d) und Gruppe 4c) mit Dihalogenatkan- oder Dihalogenaryl-Vernetzern (z. B. Hal-(CH₂)ₓ-Hal, x=3-20) unter S-Alkylierung der Sulfinatgruppe und Alkylierung der tertiären basischen N-Gruppe
(VI) Gruppe 4c) durch Reaktion mit Diaminen.
Dabei sind die Vernetzungsreaktionen (III) und (IV) und (V) bevorzugt, insbesondere die Vernetzungsreaktion (III).

### (5) Polymere des Typs D (Polymere mit Kationenaustauschergruppen und Anionenaustauschergruppen und/oder basischen N-Gruppen und/oder Vernetzungsgruppen):

Unter den Polymertyp *(5)* fallen Polymere, welche die Hauptkotten aus *(1)* enthalten können, die verschiedenartige Gruppen tragen können: die in (*2*) aufgeführten Kationenaustauschergruppen oder ihre nichtionischen Vorstufen und die in *(3)* aufgeführten Anionenaustauschergruppen oder primären, sekundären oder tertiären N-basischen Gruppen und/oder die in *(4)* aufgeführten Vernetzungsgruppen.

Folgende Kombinationen sind dabei möglich:
- Polymer D1:: Polymer mit Kationentauschergruppen oder ihren nichtionischen Vorstufen und mit Anionentauschergruppen und/oder N-basischen Gruppen
- Polymer D2:: Polymere mit Kationenaustauschergruppen oder ihren nichtionischen Vorstufen und mit Vernetzungsgruppen
- Polymer D3:: Polymere mit Anionentauschergruppen und/oder N-basischen Gruppen und mit Vemetzungsgruppen
- Polymer D4:: Polymer mit Kationentauschergruppen oder ihren nichtionischen Vorstufen und mit Anionentauschergruppen und/oder N-basischen Gruppen und mit Vernetzungsgruppen

Im Folgenden wird beschrieben wie verstreckte Folien, die eine anorganische teilchenförmige Komponente (B) enthalten so nachbehandelt werden, dass daraus Membranen für Brennstoffzellenanwendungen, Alken-Alkan-Trennung, Elektrodialyse, Umkehrosmose, Dialyse, Pervaporation, Elektrolyse und andere Membrananwendungen erhältlich sind.
Ein schmelzbares verstreckbares Polymer z.B. Polypropylen wird mit einer anorganischen teilchenförmigen Komponente (B), bevorzugt eine Schicht- und/oder Geruststrukturen enthaltende Komponente, insbesondere ein Schicht- und/oder Gerüstsilikat mit einer durchschnittlichen Teilchengröße von 5-10µ compountiert. Unter Compountieren soll verstanden werden: Das Polymer wird in der Schmelze innig mit der anorganischen Komponente, hier dem Silikat, vermischt. Eine gängige Methode ist das Vermengen der Komponenten im Doppelschneckenextruder. Als Ergebnis erhält man einen Komposit, hier Silikat in Polypropylen. Als silikatische Komponente wird beispielhaft im weiteren der Bentonit Montmorillonit verwendet. Das bedeutet aber keine spezielle Einschränkung auf Bentonite.
Die Folie wird nun wie weiter oben beschrieben nach bekannten Methoden verstreckt.
Die verstreckte Folie stellt nun eine mikroporöse Membran dar. Die Porengröße ist abhängig von der Korngröße, Dohnungseigenschaften des Polymers und von den Zugkräften, die während der Verstreckung angewendet wurden. Als dichte Membran ist sie vollkommen unbrauchbar. Gase z.B. dringen annähernd ungehindert hindurch.
Bei den erfindungsgemäßen Membranen wird ein organisch modifizierter Ton oder Zeolith verwendet. Bentonite sind Tone und Montmorillonit ist ein spezieller Bentonit Montmorillonit ist bevorzugt. Es können aber auch alle anderen Substrate verwendet werden, in die niedermolekulare Verbindungen interkalieren können. Montmorillonit ist in der Lage Moleküle durch Interkalation an sich zu binden. Montmorillonit wird so modifiziert, dass eine stark basische Komponente aus dem Partikel herausragt oder sich auf der Partikeloberfläche befindet Diese organische Modifikation ist Stand der Technik. Die organische Komponente ist bevorzugt stickstoffhaltig. Besonders bevorzugt sind Heterozyklen und unter diesen wieder Imidazole und Guanidinderivate. Das soll keine Beschränkung auf diese beiden Substanzklassen bedeuten. Es ist auch jede andere Substanzklasse möglich, die eine starke endständige Base enthält.
Dieser organisch modifizierte Montmorillonit wird mit dem Polymer compountiert, zu einer Folie extrudiert und danach verstreckt. Im Falle von Polypropylen können ohne weiteres bis zu 70% (Gew.) eingearbeitet werden. Besonders bevorzugt sind 50-60% (Gew.). Als Ergebnis erhält man eine mikroporöse verstreckte Folie mit Tonpartikel, die auf ihrer Oberfläche Imidazolgruppen tragen. Diese Folie wird nun mit Phosphorsäure nachbehandelt. Die Phosphorsäure dringt in die Folie ein und bildet eine Verbindung mit den Imidazolgruppen. Darüber hinaus füllen sich noch bestehende Hohlräume, sowohl in dem anorganischen Partikel als auch außerhalb mit der Phosphorsäure. Die Folie ist nun eine dichte Protonen leitende Membran geworden und ist in diesem Zustand bereits als solche in einer Brennstoffzelle einsetzbar.
Um die Membran weiter gegen das "Ausbluten" der Phosphorsäure abzudichten, wird erfindungsgemäß die Membran in Zirkonoxidchlorid-Lösung eingetaucht. Unlösliches Zirkonphosphat fällt an der Phasengrenze zur Membran und in der Membran selbst aus. Die Membran wird durch diesen Vorgang weiter abgedichtet. Zirkonphosphate unterstützen die Protonenleitung. Diese Membran ist geeignet für den Einsatz in der Brennstoffzelle.
Bei Verwendung von Thermoplasten als Polymerkomponente wie z.B. Polysulfon oder Vectra 950® (von Ticona) ist die daraus gebildete Membran für die PEM-Brennstoffzelle einsetzbar. Auch für Temperaturen über 80°C.
Der Vorteil des erfindungsgemäßen Verfahrens ist, dass die Folie extrudiert wird und nicht aus einem Lösungsmittel heraus gezogen wird.

Das obengenannte Verfahren mit zur Folie verstrecktern Polymer, organisch modifiziertem Ton, Imidazol, Phosphorsäure und nachfolgend teilweisem Ausfällen zu Zirkonphosphat ist nur ein exemplarisches spezielles Beispiel für die grundsätzliche Erfindung.
Es wird über die Verstreckung ein zweiter Pfad in der Folie geschaffen. Der erste Pfad stellt die polymere Komponente (A) aus dem die Folie besteht selbst dar. Der zweite Pfad sind die Hohlräume oder die Poren, die durch den Verstreckungsvorgang entstanden sind. Als Pfad soll verstanden werden ein durchgängiger Weg von einer Seite zur anderen. Damit der Weg durchgängig ist muß eine echte Perkolation möglich sein. D.h., Wasserdampf z.B. muß von der einen Seite auf die andere Seite durchdringen können. Wird der Hohlraum gefüllt, so sind die Eigenschaften des neuen Pfades abhängig von dem "Füllmaterial". Ist das Füllmaterial ionenleitend, so ist der gesamte Pfad ionenleitend. Wichtig ist, dass der Pfad durchgängig ist
Die Folie vor der Verstreckung kann durch Extrusion hergestellt werden. Es ist aber auch möglich die Folie aus einem Lösungmittel heraus herzustellen.
Die Herstellung der Folie mit dem modifizierten oder unmodifizierten Füllstoff aus einem Lösungsmittel heraus ist Stand der Technik.
Die Extrusion setzt ein Schmelzen des Polymers voraus, Die allermeisten funktionalisierten Polymere sind nicht ohne erhebliche Nachteile extrudierbar. Enthält das Polymer Sulfonsäuregruppen oder chemische Vorstufen wie Sulfochloride, so degeneriert das Polymer bevor es schmilzt. In solchen Fällen wird die Herstellung über ein Lösungsmittelhaltigen Prozeß bevorzugt.
Die Eigenschaften der zwei Pfade lassen sich über einen nahezu beliebigen Bereich modifizieren. Es ist ein Problem in der Brennstoffzellentechnik, dass Protonenleitfahigkeit unter 80°C besonders gut mit wasserhaltigen Membranen funktioniert (z.B. Nafion®). Über dieser Temperatur wird Wasser zunehmend ausgetragen und in der Folge sinkt die Protonenleitfähigkeit und damit die Leistung. Nach dem Stand der Technik hat man versucht dieses Problem zu lösen in dem man Kompositmaterialen aus einem Polymer und einem anorganischen Füllstoff, der auch protonenleitend ist oder die Protonenleitung unterstützt, herstellt. Das Problem dabei ist, dass die einzelnen Pfade, also anorganischer Füllstoff oder organisches Ionomer nicht unabhängig voneinander von einer Seite der Membran auf die andere Seite der Membran durchgehend sind.
Erfindungsgemäß wird nun aufbauend nach diesem Stand der Technik eine Membran hergestellt. Diese enthält einen wasserabhangigen polymeren Protonenleiter z.B. eine polymere Sulfonsäure und eine anorganische Komponente, die gegebenenfalls vorher organisch modifiziert wurde. Diese Folie wird nun verstreckt und der entstehende zweite Pfad mit einer bei höherer Temperatur (T>80°C) protonenleitenden Substanz gefüllt. Dieses Füllen kann z.B. dadurch ermöglicht werden, dass die mikroporöse Membran abwechselnd in Phosphorsäure und Zirkonoxidchlorid (ZrOCl₂) nachbehandelt wird. Diese Vorgang kann so oft wiederholt werden bis keine weiteres Zirkonphosphat mehr in der Membran ausfällt. Das Ausfallen von Zirkonphospbat ist aber nur eine Möglichkeit Als Polymer wird z.B. ein sulfoniertes Polyetherketon oder Polysulfon verwendet.
Als Ergebnis erhält man eine Membran, die zwei durchgehende protonenleitende Pfade besitzt. Für den Temperaturbereich unter 80°C funktioniert die Protonenleitung überwiegend über die in Wasser gequollene polymere Sulfonsäure und über den Temperaturbereich darüber über den anorganischen Protonenleiter. Es findet ein fließender Übergang statt.

In einer weiteren Modifikation wird das Konzept der zwei Pfade reduziert auf eine unfertige mikroporöse Membran, die in einem zweiten. Modifikationsschritt der gewünschten Anwendung angepasst wird. Es sind zwei Membranen, die zu einer zusammengefügt werden ohne das sie sich dabei in ihrer Membranfunktion stören. Ein anderes anschauliches Bild ist ein textiler Stoff der aus zwei Garnen mit unterschiedlicher Farbe gewebt wurde. Wobei man die Garne in einem sehr breiten Bereich wählen kann. Das eine Garn wurde aber in den fertigen homogenen Stoff nachträglich eingefügt.

Das Verfahren wird exemplarisch noch einmal schematisch beschrieben für den besonders bevorzugen Fall, das die Komponente (A) ein ohne Degradation schmelzbares Polymer ist und das die teilchenförmige Komponente (B) ein Schicht- oder Gerüstsilikat mit einer Durchschnittsgröße von 0,1 bis 15µ ist.
Durch Extrusion eines Composites der die Komponenten (A) und (B) enthält mit nachfolgender Verstreckung erhält man eine mikroporöse Folie. Diese mikroporöse Folie wird nachbehandelt in einer Lösung die Moleküle enthält, die wenigsten zwei funktionelle Gruppen im gleichen Molekül besitzen. Eine der funktionellen Gruppe im Molekül hat eine positve Ladung, bevorzugt ist dies ein positives Stickstoffatom. Der positive Stickstoff interkaliert in die Schicht- bzw. Gerüststrukturen des Silikates. Es findet ein Kationenaustausch statt. Durch Protonierung eines primären, sekundären oder tertiären Stickstoff z.B. durch das saure Silikat entsteht ebenfalls ein Stickstoff-Kation, der in das Silikat interkaliert. Der Kationenaustausch am Silikat kann, wie bereits weiter oben erwähnt vollkommen oder teilweise stattfinden. Die entstehende Membran ist für bestimmte Membrananwendungen, wie Alken-Alkan-Trennung bereits ausreichend abgedichtet. Die in das Schicht- oder Gerüstsilikat nicht interkalierte verbleibende funktionelle Gruppe kann eine Vorstufe einer Ionenleitenden Gruppierung sein. Beispielweise Sulfonsäurechloride, Carbonsäurechlorid oder Phosphonsäurechloride. Weitere Beispiele für Vorstufen von Kationen- oder Anionentauschergruppierungen sind weiter vorher genannt. Diese Vorstufen werden in einer weiteren Nachbehandlung in eine die selektive Permeation unterstützende Gruppierung umgesetzt Dies ist z.B. im Falle der Sulfonsäurchalogenide eine Hydrolyse, die im sauren, neutralen oder alkalischen Medium stattfindet.
Um die Folie weiter abzudichten wird nun die verstreckte Folie wechselweise mit einem mehrwertigen Metallsalz z.B. Ti4+, Zr4+, Ti3+, Zr3+, TiO2+, M2+ und einer Säure, die nieder oder hochmolekular sein kann versetzt. Als Säuren sind besonders bevorzugt mit Wasser verdünnte Phosphorsäure und Schwefelsäure. Die Phosphorsäure hat eine Konzentration von 1-85 Gew.%. Bevorzugt ist eine Konzentration von 20 bis 80 Gew.%. Die Schwefelsäure hat eine Konzentration von 1 bis 80 Gew.%. Bevorzugt ist eine Konzentration von 20 bis 50 %Gew-.
Des Vorgang des Aufällens eines schwerlöslichen Protonenleiters in der Membran kann mehrfach wiederholt werden.

Als anorganische Komponente kann jede Substanz verwendet werden, die bei einer Verstreckung zur Folge hat, dass sich frei Räume um diese Substanz bilden (siehe dazu Abb. 1: Vorgang der Hohlraumbildung durch Verstreckung). Es ist auch nicht zwingend notwendig, dass die Komponente anorganisch sein muß. Einzige Bedingung ist, wie schon gesagt, dass sich um das Partikel nach der Verstreckung ein freier Raum gebildet hat. Die Verstreckung kann mono- oder auch biaxial erfolgen. Bevorzugt ist eine biaxiale Verstreckung. Für die Anwendung in Hohlfasern, genügt aber auch eine monoaxiale Verstreckung.

Zusätzlich ist auch noch eine Verstreckung über die dritte Raumrichtung möglich, also Triaxial. Dazu wird z.B. der zur Folie extrudierte Komposit über Vakuumdüsen in der Ebene gehalten und von oben setzt eine Platte auf, die ebenfalls über kleine Poren ein Vakuum ziehen kann. Die Folie ist nun zwischen zwei Platten fixiert. Zieht man nun die beiden Platten auseinander, bei angelegtem Vakuum, und wählt den Abstand so, dass die Folie nicht reißt sondern nur verstreckt, so erhält man eine Folie die über die Dicke verstreckt wurde.

Eine weitere Anwendung findet die Erfindung in der Elektrodialyse.
Die mikroporöse verstreckte Membran besteht aus einem Kationentauscher und der zweite Pfad besteht aus einem Anionentauscher, gegebenfalls mit Protonenleaching z.B. beschrieben in DE 19836514 A1 (Abb.3; Zeichnungen Seite 2). Wird diese Membran in ein elektrisches Feld gehalten so dissoziiert in ihr das Wasser in Protonen und Hydroxylionen. Gemäß dem elektrischen Feld wandern die Protonen über den Kationentauscherpfad zur Kathode und die Hydroxylionen (OH⁻) über den Anionentauscherpfad zur Anode. Es lassen sich auf diese Weise sehr kostengünstig und einfach Membranen für die Elektrodialyse herstellen.

Die Pfade können aber auch getauscht werden. Dann wird zuerst eine Anionentauschermembran bzw. eine chemische Vorstufe der Anionentauschergruppierung verstreckt und der zweite Pfad ist nun eine Kationentauschermembran. Die Modifikation der anorganischen Komponente muß entsprechend gewählt werden.

Ein Vorteil der Erfindung ist vorher nur kurz erwähnt worden. Ionomere sind im Regelfall nicht extrudierbar. So läßt sich Nafion® nicht ohne Plastifizierer extrudieren. Der Plastifizierer (Hilfsmittel zur Extrusion) läßt sich später nur sehr schwer aus der Membran entfernen. Dies ist aber notwendig für die Funktionsfähigkeit der Membran.
Erfindungsgemäß lassen sich organisch modifizierte Partikel (z.B. Montmorillonit) in schmelzbaren und somit extrudierbaren Polymeren zu Folien verarbeiten. Im zweiten Schritt wird durch die Verstreckung der durchgängige Pfad ausgebildet und dann mit dem Ionenleiter gefüllt. Durch die teilchenförmige anorganische Schicht- oder Gerüststrukturen enthaltende Komponente (B) wird eine ansonsten unter den Anwendungsbedingungen einer Membran bewegliche bzw. flüchtige funktionelle Gruppen tragende chemische Substanz der allgemeinen Formel für hydrophobierende Funktionalisierungmittel (I) oder (II) über einen technisch anwendbaren Zeitraum in der mirkroporösen Folie so fixiert, das diese in Membrananwendungen eingesetzt werden kann.
Dies erlaubt eine enorme Senkung der Produktionskosten. Es können in großen bestehenden Anlagen große Flächen einer "Roh"-Membran hergestellt werden, die je nach Anwendung in einem zweiten Schritt modifiziert werden. So sind nach diesem Verfahren sehr kostengünstig Membranen für die Meerwasserentsalzung herstellbar. Hier wird als Grundpolymer z.B. Polypropylen verwendet Die anorganische Komponente z.B. Montmorillonit wird vorher so organisch modifiziert, dass an der Oberfläche eine geladene Gruppe verbleibt Dies kann z.B. mit einer alpha-omega Aminosulfonsäure geschehen. Nach der Verstreckung erhält man als Resultat eine geladene mikroporöse Membran. Diese ist geeignet für die Umkehrosmose.
Darüber hinaus können innerhalb der Poren noch Vernetzungsreaktionen durchführt werden über endständige Vernetzungsfähige Gruppen der Funknonalisierungsmittel. Dies kann eine kovalente und/ oder eine ionische Vernetzung sein.

Eine weitere Anwendung ist die Verwendung in der Alken-Alkan-Trennung.
Stickstoff in Heterozyklen mit einem freien Elektronenpaar bildet mit Silberionen z.B. Silbernitratlösung einen schwerlöslichen Komplex. Es wurde nun überraschend festgestellt, dass, wenn dieser Komplex sich in einer Membran befindet, dieser in der Lage ist reversibel Alkene an sich zu binden.
Stellt man eine Folie aus Polybenzimidazol her und legt diese über einen Zeitraum von 24 Stunden bis zu zwei Wochen in verdünnter bis konzentrierter Silbersalzlösung, bevorzugt ist Silbernitrat, ein, so hat diese Membran überraschenderweise eine Trennleistung auf Alken-Alkan-Gemische. Als Lösungmittel für das Silbersalz kann Wasser oder ein aprotisches Lösungsmittel verwendet werden. Alkene und Olefine permitieren durch eine solche Membran wasserfrei mit einer technisch anwendbaren Flußrate. Eine Verbesserung der Flußzahlen wird erreicht durch einfügen von organisch modifiziertem Montmorillonit mit heterozyklischem Stickstoff an der Oberfläche, der mindestens ein freies Elektronenpaar aufweist z.B. eine endständige Imidazolgruppe. Die Membran wird vorsichtig verstreckt und danach in Silbersalzlösung eingelegt Durch das Verstrecken werden in der Membran Kanalstrukturen erzeugt, die den Transport erleichtern.
Eine erhebliche Kostenreduktion wird erreicht, wenn ein unmodifiziertes Polymer z.B. Polypropylen mit organisch modifiziertem Montmorillonit verstreckt wird. Der Montmorillonit trägt auf seiner Oberfläche wieder endständige Imidazol oder Pyridin-Gruppen. Nach der Verstreckung wird die mikroporöse Membran in eine Silberionen haltige Lösung eingelegt. Danach ist die Membran geeignet für die Alken-Akan-Trennung. Die Membran ist geeignet für die Trennung von niedermolekularen Substanzen bei denen eine Komponente des Gemisches eine Doppelbindung enthält, die eine reversiblen Komplex mit Silberionen eingehen. Besonders bevorzugt ist die Trennung von niedermolekularen Olefin/Alkan-Gemischen.
Der Montmorillonit muß nicht zwangsweise modifiziert sein. Polypropylen wird mit Montmorillonit compountiert und verstreckt. Danach wird die poröse Folie in einer Lösung nachbehandelt, die aromatischen Stickstoff mit wenigstens einem freien Elektronenpaar enthält. Das Lösungsmittel kann jedes geeignete Lösungmittel oder Lösungsmittelgemisch sein. Wasser und aprotische Lösungsmittel sind bevorzugt. Wichtig ist nur, daß das entsprechende stickstoffhaltige Molekül in die Kavitäten des Tones eindringt und die Poren ausfüllt. In dem darauffolgenden Schritt wird die Membran in einer Silber- oder Kupferionenhaltigen Lösung nachbehandelt. Als Lösungsmittel ist alles geeignet was Silber- oder Kupferionen in Lösung hält. Besonders bevorzugt ist Wasser und aprotische Lösungsmittel, wie zum Beispiel DMSO, NMP und THF. Als Folge fällt der Stickstoff-Silberionen-Komplex bzw. der Stickstoff-Kupferionen-Komplex in der Membran aus. Dieser Vorgang kann gegebenenfalls mehrfach wiederholt werden. Die Membran ist nun geeignet für die wasserfreie Alken-Alkan-Trennung.

## Patentansprüche

1. Verfahren **dadurch gekennzeichnet, daß** man eine Folie umfassend eine polymere Komponente (A), und eine teilchenförmige Komponente (B), welche verteilt ist in der Matrix der polymeren Komponente (A), mono oder biaxial verstreckt und nach der Verstreckung einer Nachbehandlung (C) unterzieht, wobei die Nachbehandlung aus mehreren Schritten bestehen kann.

2. Verfahren nach Anspruch 1 **dadurch gekennzeichnet, dass** die verstreckte Folie auch einer Wärmebehandlung bei 80° bis 380°C unterworfen wird wobei eine transversale Relaxation erfolgen kann.

3. Verfahren nach Anspruch 1 **dadurch** charakterisiert, dass anorganische Substanzen mit Schicht- und/oder Gerüststrukturen als Komponente (B) verwendet werden.

4. Verfahren nach Anspruch 1 **dadurch** charakterisiert, dass die verstreckte Folie nachbehandelt wird in einer Lösung oder einer Suspension die organische funktionalisierende Hydrophobierungsmittel der allgemeinen Formel I und/oder II enthält 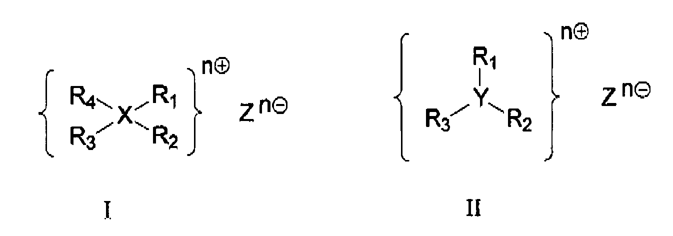 wobei die Substituenten **dadurch gekennzeichnet sind, dass** R1, R2, R3, R4 unabhängig voneinander Wasserstoff, einen geradkettigen verzweigten, gesättigten oder ungesättigten Koblemwasserstoffrest mit 1 bis 40, vorzugsweise 1 bis 20 C-Atomen, welcher gegebenenfalls mindestens eine funktionelle Gruppe trägt oder 2 der Reste miteinander verbunden sind, insbesondere zu einem heterocyclischen Rest mit 5 bis 10 C-Atomen besonders bevorzugt mit einem und mehr N-Atomen,
X für Phosphor, Stickstoff oder Kohlenstoff,
Y für Sauerstoff, Schwefel oder Kohlenstoff,
wobei im Fall das Y für Kohlenstoff steht, wenigstens einer der Reste R1, R2 oder R3 doppelt gebunden ist an den Kohlenstoff,
n für eine ganze Zahl von 1 bis 5, vorzugsweise 1 bis 3 und
Z für ein Anion steht.

5. Verfahren nach Ansprucht 1-4 **dadurch gekennzeichnet, dass** die polymere Komponente (A) ein Polyolefin, wie Polyethylen, Polypropylen, Polyisobutylen, Polynorbornen, Polymethylpenten, Poly(1,4-isopren), Poly(3,4-isopren), Poly(1,4-butadien), Poly(1,2-butadien), ein Styrol(co)polymer wie Polystyrol, Poly(methylstyrol), Poly(trifluorstyrol), Poly(pentafluorostyrol), ein N-basisches Polymer wie Polyvinylcarbazol, Polyethylenimin, Poly(2-vinylpyridin), Poly(3-vinylpyridin), Poly(4-vinylpyridin), ein (Het)arylhauptkettenpolymere, wie Polyetherketon PEK, Polyetheretherketon PEEK, Polyetheretherketonketon PEEKK, Polyetherketonetherketon-keton PEKEKK, ein Polyethersulfone wie Polysulfon, Polyphenylsulfon, Polyetherethersulfon, Polyethersulfon PES, ein Poly(benz)imidazole wie PBI, Polyphenylenether wie Poly(2,6-dimethyloxyphenylen), Poly(2,6-diphenyloxyphenylen), ein Polyphenylensulfid, ein perfluoriertes Polymer und/oder ein Copolymere der genannten ist.

6. Verfahren nach einem der vorangegangen Ansprüche **dadurch gekennzeichnet, dass** die Folie vor der Verstreckung zusätzlich zu den Komponenten A und B noch einen Restlösungsmittelgchalt enthält, wobei das Lösungsmittel nur ein Lösungsmittel für die Komponente A ist.

7. Verfahren nach Anspruch 6 **dadurch gekennzeichnet, dass** der Restlösungsmittelgehalt zwischen 2 und 30% Gew. der Folie liegt.

8. Lösungsmittel nach Anspruch 7 **dadurch gekennzeichnet, dass** das Lösungsmittel Wasser oder ein aprotisches Lösungsmittel, wie Tetrahydrofuran, Dimethylsulfoxid, N-Methylpyrrolidon, Sulfolan oder Dimethylacetamid, ist.

9. Verfahren nach Anspruch 6 **dadurch gekennzeichnet, dass** die Verstreckungstemperatur über dem Schmelzpunkt des Lösungsmittels liegt.

10. Funktionalisierende Hydrophobierungsmittel nach Anspruch 4 **dadurch gekennzeichnet, dass** sie als funktionelle Gruppen Hydroxyl-, Nitro-, Carboxyl-, Phosphonsäure- oder Sulfonsäuregruppen oder deren nichtionische Vorläufer wie Sulfonsäurechloride oder Carbonsäurechloride enthalten.

11. Polymere Komponente (A) aus Anspruch 5 **dadurch gekennzeichnet, dass** sie Kationenaustauschergruppen, Anionenaustauschergruppen, N-basische Gruppen oder deren nichtionischen Vorstufen enthalten.

12. Polymere Komponente (A) aus Anspruch 5 **dadurch gekennzeichnet, dass** sie Vernetzungsgruppen wie Sulfinatgruppen und/oder ungesättigte Gruppen enthält.

13. Schicht- und/oder Gerüstsilikat nach Anspruch 3 **dadurch gekennzeichnet, dass** es mit Triphenylmethanfarbstoffen oder deren nicht-oxidierten Vorstufen modifiziert ist, wobei die Triphenylmethanfarbstoffe funktionalisiert sein können, wie die Hydrophobierungsmittel der allgemeinen Formel I und/oder II und wobei die Reste gegebenenfalls noch Fluor enthalten.

14. Verfahren nach Anspruch 1 und 2 **dadurch gekennzeichnet, dass** die Folie nach der Verstreckung und gegebenenfalls organischen Modifikation wechselweise mit einem mehrwertigen Metallsalz und einer Säure, die nieder- oder hochmolekular sein kann, versetzt wird.

15. Verfahren nach Anspruch 12 **dadurch gekennzeichnet, dass** das Metallsalz Ti⁴⁺, Zr⁴⁺, Ti³⁺, Zr³⁺, TiO²⁺ oder ZrO²⁺ ist.

16. Verfahren nach Anspruch 1 und 2 **dadurch gekennzeichnet, dass** die Folie nach der Verstreckung und gegebenenfalls organischen Modifikation abwechselnd in Phosphorsäure (1-85%) und Zirkonoxidchlorid-Lösung nachbehandelt wird.

17. Verfahren nach einem der vorangegangen Ansprüche **dadurch gekennzeichnet, dass** die Folie nach der Verstreckung und gegebenenfalls organischen Modifikation in Phosphorsäure (1-85%) oder Schwefelsäure (1-80%) nachbehandelt wird.

18. Verfahren nach Anspruch 4 **dadurch gekennzeichnet, dass** die Folie nach der organischen Modifikation mit einer Silber- oder Kupierionenhaltigen Lösung nachbehandelt wird.

19. Verstreckte Folie erhältlich nach einem der vorangegangen Verfahren.

20. Verstreckte Folie nach einem der vorangegangen Ansprüche, **dadurch gekennzeichnet, dass** sie vor oder nach der Nachbehandlung C einer Oberflächenbehandlung wie Coronaentladung oder Plasmabehandlung auf einer oder beiden Seiten unterworfen wird.

21. Verstreckte Folie nach einem der vorangegangen Ansprüche, **dadurch gekennzeichnet, dass** sie vor oder nach der Nachbehandlung C, auf einer oder auf beiden Seiten mit einer Schicht aus einem Polymer oder Polymergemisch, das gegebenenfalls funktionelle Gruppen trägt, Lösungsmittel oder Lösungsmittelfrei beschichtet oder laminiert wird.

22. Verwendung der Membran nach Anspruch 19 in der Alken-Alkan-Trennung, in Brennstoffzellen, der Elektrodialyse, Umkehrosmose, Dialyse, Pervaporation und Elektrolyse.
